# FASCICULE DE BREVET EUROPEEN

(11) **EP 1 844 260 B1**
(45) Date de publication et mention de la délivrance du brevet: **14.03.2012**
(21) Numéro de dépôt: 06707901.2
(22) Date de dépôt: 30.01.2006
(51) Int. Cl.: F16M 13/02, A61M 5/14

(54) **DISPOSITIF POUR FIXER UN OBJET DANS UNE POSITION SPATIALE PRIVILÉGIÉE**
VORRICHTUNG ZUR FIXIERUNG EINES OBJEKTS IN EINER PRIVILEGIERTEN RAUMPOSITION
DEVICE FOR FIXING AN OBJECT IN PRIVILEGED SPATIAL POSITION

(30) Priorité: 01.02.2005 FR 0550289
(43) Date de publication de la demande: 17.10.2007
(73) Titulaire: Fresenius Vial SAS, 38590 Brézins (FR)
(72) Inventeur: PONÇON, Gilbert, F-38340 Pommiers La Placette (FR); WOLFF, Rémy, F-38210 Morette (FR)
(74) Mandataire: Vièl, Frédérique
(86) Numéro de dépôt international: PCT/EP2006/050522
(87) Numéro de publication internationale: WO 2006/082171

(56) Documents cités:
- EP-A- 0 321 120
- WO-A-01/36027
- DE-U1- 29 619 158
- US-A- 2 711 300
- US-A- 5 014 956
- US-A- 5 322 253
- US-A- 5 779 207

## Description

L'invention concerne un dispositif pour fixer un objet dans une position spatiale privilégiée, notamment un module médical, sur un support essentiellement vertical ou sur un support essentiellement horizontal, muni de moyens de fixation pouvant pivoter de 90° autour d'un axe (P) et permettant indifféremment la fixation sur le support vertical ou sur le support horizontal, les moyens de fixation pivotants comprenant une platine pivotante, fixée sur l'une des parois de l'objet à fixer, de préférence la paroi arrière, de sorte à pouvoir pivoter autour de l'axe (P) d'au moins 90° entre une première position permettant la fixation de l'objet sur un support vertical et une deuxième position permettant la fixation de l'objet sur un support horizontal, et des moyens de serrage solidaires de la platine pivotante pour serrer les moyens de fixation pivotants sur le support vertical ou le support horizontal.

Le dispositif de fixation de l'invention est destiné particulièrement à un objet devant être fixé dans une position spatiale privilégiée quelque soit l'orientation du support. C'est le cas par exemple d'un module médical tel qu'une pompe à seringue qui peut être fixée sur un mat vertical, sur un rail horizontal ou dans un rack. Quel que soit le support sur lequel elle doit être fixée, il faut que son orientation dans l'espace soit toujours la même, c'est-à-dire que le haut de la pompe doit être en haut et le bas en bas. II n'est en général pas possible d'utiliser ces pompes dans une position « couchée », c'est-à-dire pivotée de 90° par rapport à un axe horizontal.

On connaît de tels dispositifs de fixation qui permettent de fixer un module médical tel qu'une pompe soit sur un mat vertical soit sur un rail. Dans certains cas, le module peut également être introduit dans un rack (support dans lequel peuvent prendre place plusieurs modules). Certains modèles de modules médicaux sont munis de moyens qui permettent de les fixer selon les besoins aussi bien sur un mat que sur un rail.

Le document WO 01/36027 A1 par exemple décrit un tel dispositif. Le module médical est muni sur sa face arrière d'une part d'une vis de serrage rabattable coopérant avec une gorge réalisée dans la paroi arrière du module et dont la section correspond à un arc de cercle, et qui permet lorsqu'elle est sortie de fixer le module sur un mat vertical en plaçant celui-ci au fond de la gorge et en vissant la vis de serrage rabattable. Il est prévu d'autre part un évidement de section rectangulaire s'étendant sur toute la largeur de la face arrière qui, combiné à une came de blocage, permet de fixer le module sur un rail horizontal. Enfin, le dispositif peut également être monté sur un rack.

Le dispositif de fixation de ce module est relativement compliqué. Notamment, il est nécessaire de rabattre le mors de fixation sur le mat dans un évidement prévu à cet effet dans la paroi arrière du module avant de pouvoir fixer ce dernier sur un rail. D'autre part, le module ne peut être fixé que sur un type de rail dont les dimensions sont imposées par la largeur et la profondeur de l'évidement horizontal.

Le document US 5 779 207 A présente un dispositif de fixation constitué d'un mors muni d'une plaque sur laquelle peut être positionné un objet à fixer dans différentes positions. Les auteurs indiquent qu'il est possible avec ce dispositif de fixer l'objet sur des supports verticaux ou horizontaux. Dans tous les cas, pour adapter le dispositif à l'orientation du support, il est nécessaire de dévisser un certain nombre de vis, de faire pivoter de 90° l'objet et de le revisser dans cette position sur la plaque support. Certaines de ces vis servent également au montage du mors, de sorte que cette opération semble bien compliquée.

On connaît du document US 5 014 956 A un support pour boisson articulé comprenant d'un côté une pince destinée à être placée sur une paroi et de l'autre un porte-boisson. Entre la pince et le porte-boisson sont placés deux éléments d'articulation et d'extension orientés perpendiculairement l'un à l'autre et formant en tout trois pivots. Le premier élément d'articulation est relié à la pince par une platine pivotante, le deuxième au porte-boisson. Le premier pivot est formé entre la platine pivotante de la pince et le premier élément d'articulation, perpendiculaire à l'axe de pivotement de la platine, le deuxième pivot, parallèle au premier, est formé entre le premier et le second éléments d'articulation et le troisième pivot, perpendiculaire aux deux premiers et à l'axe de pivotement de la patine, se trouve entre le second élément d'articulation et le porte-boisson. Chaque pivot est bloqué par un écrou papillon. Il est ainsi possible de faire prendre une position horizontale au porte-boisson quelque soit l'orientation de la paroi sur laquelle est placée la pince. De plus, en inclinant plus ou moins le premier élément d'articulation par rapport à la platine de la pince et au porte-boisson, il est possible d'éloigner plus ou moins le porte-boisson de la pince. De même, il est possible de rabattre autour du troisième pivot le porte-boisson de 90° vers le deuxième élément d'articulation. Ce dispositif est destiné à un porte-boisson relativement léger. Grâce à ses différents pivots, il permet une grande liberté de positionnement du porte-boisson par rapport à la pince. Cependant, il est particulièrement compliqué en raison justement de ses nombreux pivots. Le bon positionnement nécessite d'intervenir sur quatre pivots dont trois bloqués par des écrous.

De US 5 322 253 A, on connaît un système de montage constitué d'une part d'un mors de fixation sur lequel peut être fixée une pince dans deux positions perpendiculaires l'une de l'autre. La pince peut donc être fixée au choix sur un support horizontal ou sur un support vertical. Dans ce dispositif de fixation, le mors et la pince restent toujours alignés de sorte que l'ensemble reste très encombrant lors du stockage.

De EP 0 321 120 A1, on connaît un dispositif de fixation constitué d'un cintre fixé par ses extrémités libres sur les parois latérales d'un module médical et par son centre à un mors. Le module peut pivoter entre les extrémités du cintre autour d'un premier axe de pivotement, et le cintre peut lui-même pivoter sur le mors autour d'un second axe de pivotement perpendiculaire au premier. Il est ainsi possible de placer le module sur un support horizontal ou vertical. Il est également possible d'incliner le module pour améliorer la visibilité. Ici aussi, le dispositif de fixation est relativement encombrant. Il se pose également le problème de l'encombrement lors du stockage.

Enfin, on connaît du document DE 296 19 158 U1 un dispositif de fixation selon le préambule. Les moyens de fixation dépassant derrière le module médical, celui-ci est relativement encombrant lors de son stockage.

L'objectif de l'invention est de proposer un dispositif de fixation qui permette de fixer un objet devant être utilisé dans une position spatiale privilégiée aussi bien sur un support vertical que sur un support horizontal plus simple et qui soit moins encombrant que les dispositifs de fixation connus de l'état de la technique.

Un autre objectif de l'invention est de pouvoir utiliser le dispositif de fixation également pour faciliter l'introduction de l'objet à fixer, par exemple un module médical, dans un emplacement destiné à cet effet, tel qu'un emplacement dans un rack, sans qu'il soit nécessaire de pousser sur l'objet à fixer pour le faire pénétrer au risque de renverser le rack.

Cet objectif est atteint conformément à l'invention par le fait que les moyens de serrage peuvent pivoter par rapport à la platine autour d'un axe (N) de sorte à pouvoir être rabattus contre la platine ou redressés perpendiculairement à ladite platine. En position rabattue contre la platine, les moyens de serrage sont en position de rangement. Ils ne débordent pas ou presque pas de la paroi arrière du module. En position redressée perpendiculairement à la platine, les moyens de serrage sont en position d'utilisation. Selon l'état de pivotement de la platine, les moyens de serrage sont en position horizontale et permettent la fixation sur un mat vertical ou au contraire en position verticale dans laquelle ils permettent une fixation sur un rail horizontal.

Conformément à l'invention, les moyens de serrage sont munis de moyens d'actionnement disposés sur lesdits moyens de serrage de sorte à être manipulables depuis le côté latéral des moyens de fixation. Ainsi, l'opérateur peut accéder aux moyens d'actionnement depuis le côté latéral des moyens de fixation, donc du module, ce qui est beaucoup plus commode que de devoir y accéder de l'arrière, comme c'est souvent le cas dans l'état de la technique.

Il est préférable que les moyens de serrage comprennent une noix munie d'un mors et d'une vis de serrage. C'est un mode de réalisation particulièrement simple et pratique, facile à réaliser industriellement.

Pour des raisons de sécurité, il est préférable de prévoir des moyens de verrouillage pour verrouiller les moyens de serrage dans la position d'utilisation perpendiculaire à la platine. Ainsi, lorsque le module devra être fixé sur un support, les moyens de serrage ne risqueront pas de se rabattre au risque de rendre impossible la fixation du module sur le support.

Les moyens de verrouillage peuvent comprendre par exemple un verrou pivotant autour d'un axe de pivotement (V) parallèle à l'axe de pivotement (P) de la platine, les axes (V) et (P) étant de préférence confondus, et ayant une partie excentrique avec un bord plat qui, quand le verrou est actionné, prend appui contre les moyens de serrage et en bloquent le pivotement. Pour cela, les moyens de serrage peuvent être munis d'une surface d'appui située sur la face interne des moyens de serrage (face faisant face à la platine lorsque les moyens de serrage sont rabattus) sur laquelle le bord plat de la partie excentrique prend appui, et d'une surface d'arrêt sur la face arrière des moyens de serrage (face faisant face à la platine lorsqu'ils sont redressés) qui prend appui contre la platine lorsque les moyens de serrage sont redressés et arrête leur mouvement de pivot empêchant de dépasser cette position redressée à 90°.

Afin que les moyens de serrage soient retenus contre la platine lorsqu'ils sont en position de rangement, il est préférable de prévoir des moyens de retenue sur les moyens de serrage et/ou sur la platine, pour retenir les moyens de serrage contre la platine sans pour autant les bloquer lorsque les moyens de serrage sont en position rabattue contre ladite platine. Ces moyens de retenue peuvent être par exemple constitués par des aimants placés d'une part sur la platine et d'autre part sur les moyens de serrage. Il est également possible de placer les aimants non pas sur la platine, mais directement dans la paroi de l'objet à fixer.

Pour faciliter l'utilisation des moyens de fixation selon l'invention, il est préférable de prévoir des moyens d'arrêt pour limiter le mouvement de pivot des moyens de fixation pivotants, de préférence entre deux positions extrêmes situées à 90° l'une de l'autre. Ainsi, les moyens de fixation ne peuvent prendre que deux positions perpendiculaires l'une à l'autre. Il serait cependant également possible de permettre aux moyens de fixation pivotants de prendre quatre positions distinctes décalées de 90° les unes par rapport aux autres, présentant ainsi deux positions possibles pour chaque type de support horizontal ou vertical. Les moyens d'arrêt peuvent consister par exemple en un picot de guidage et d'arrêt solidaire de la platine et coopérant avec une gorge de guidage réalisée dans la paroi de l'objet à fixer ou inversement.

Il peut être préférable de ne permettre aux moyens de serrage de se redresser que lorsque la platine est en position d'utilisation, autrement dit d'interdire aux moyens de serrage de se redresser dans une position intermédiaire entre deux positions d'utilisation. Pour cela, il est possible de prévoir des moyens de guidage pour guider le mouvement de pivot des moyens de serrage dans l'une ou l'autre position d'utilisation. Cela pourra être réalisé par exemple en concevant ces moyens de guidage sous la forme d'une nervure de guidage réalisée sur les moyens de serrage et d'au moins une rainure de guidage réalisée dans la paroi de l'objet à fixer face à l'une au moins des positions d'utilisation et dans laquelle peut pénétrer la nervure de guidage lorsque les moyens de serrage pivotent autour de l'axe (N) en direction de la position d'utilisation. Si la platine n'est pas dans l'une des positions d'utilisation, la nervure ne pourra pas pénétrer dans l'une des gorges de guidage. Elle bloquera alors le mouvement de pivot des moyens de serrage en direction de la position redressée. Pour redresser les moyens de serrage en position d'utilisation, il faut donc que la platine soit correctement positionnée.

Afin que le dispositif de fixation soit le plus stable possible en position ouverte et que l'objet à fixer ne risque pas de pivoter sur le côté, il est préférable de prévoir un indexage angulaire en fin de redressement des moyens de serrage. Pour cela, des moyens de blocage sont prévus pour bloquer la platine dans au moins l'une de ses positions d'utilisation, ces moyens de blocage comprenant de préférence un index placé sur les moyens de serrage qui pénètre, lorsque les moyens de serrage sont redressés en position d'utilisation, dans une gorge d'indexage réalisée dans la paroi de l'objet à fixer. Alors que les moyens de guidage n'avaient en principe pas besoin de permettre un mouvement sans jeu, il est préférable que cet indexage angulaire soit le plus précis possible et sans jeu.

Il est préférable que les moyens de fixation pivotants comprennent une rainure dont les dimensions correspondent aux dimensions habituelles des supports horizontaux, ladite rainure étant réalisée de préférence dans le mors des moyens de serrage. Il est ainsi possible de placer le module sur un rail horizontal de section rectangulaire sans qu'il risque de pivoter sous l'effet de son propre poids avant que les moyens de serrage ne soient mis en place. Il est possible de prévoir plusieurs dimensions de rail en imbriquant les unes dans les autres plusieurs rainures, de la plus large vers la plus fine.

Dans une variante de réalisation de l'invention, les moyens de fixation pivotants sont munis de moyens pour faire pénétrer l'objet à fixer dans un emplacement, par exemple dans un rack, lesdits moyens d'introduction comprenant de préférence un picot parallèle à la paroi arrière de l'objet et pouvant décrire un mouvement circulaire par rapport à la paroi arrière de l'objet à fixer, ledit picot pouvant pénétrer dans une gorge de guidage réalisée dans une des parois latérales de l'emplacement du rack, de sorte que le mouvement du picot dans la gorge de guidage provoque l'entrée de l'objet à fixer dans l'emplacement. En faisant pivoter la platine sur son axe (P), le picot pénètre dans la gorge de guidage. Plus il pénètre dans celle-ci plus la gorge le contraint à avancer vers le fond de l'emplacement en entraînant le module avec lui. Il n'est donc pas nécessaire d'appuyer sur le module pour le faire pénétrer dans l'emplacement, au risque de renverser tout le rack.

Il peut être favorable de prévoir un capteur pour détecter le bon positionnement de l'objet à fixer dans l'emplacement, le capteur étant de préférence un capteur à effet Hall coopérant avec un aimant placé dans les moyens de fixation pivotants, de préférence à proximité du picot. Le capteur peut être positionné par exemple près de la gorge de guidage, de préférence à proximité de la section terminale de ladite gorge.

L'invention concerne également une platine pour dispositif conforme à l'invention, caractérisée par un axe de pivotement (P) ainsi que des moyens d'attache pour des moyens de serrage pouvant pivoter, notamment pour une noix, et/ou des moyens d'arrêts, de préférence sous la forme d'un picot de guidage et d'arrêt ou d'une gorge, et/ou des moyens de verrouillage pour verrouiller des moyens de serrage dans une position d'utilisation, et/ou des moyens d'introduction, de préférence un picot de guidage éventuellement associé à un aimant, et/ou des moyens de retenue, de préférence des aimants.

Font également partie de l'invention des moyens de serrage pour un dispositif conforme à l'invention, caractérisés par une noix munie d'un mors et d'une vis de serrage et/ou des moyens de fixation pivotant pour permettre la fixation par exemple sur une platine, et/ou des moyens de retenue, de préférence des aimants, et/ou une rainure pour la fixation sur un support de section polygonale, par exemple rectangulaire, et/ou des moyens de verrouillage, de préférence sous forme d'une surface d'appui destinée à coopérer avec des moyens de verrouillage situés sur une platine ou un autre support, et/ou une surface d'arrêt pour arrêter le mouvement de pivot, et/ou des moyens de guidage pour guider le pivotement des moyens de serrage dans une position d'utilisation, de préférence sous la forme d'une nervure de guidage, et/ou des moyens de blocage pour bloquer dans une position d'utilisation une platine sur laquelle les moyens de serrage pourront être fixés.

L'invention concerne également des moyens de verrouillage pour un dispositif de fixation conforme à l'invention, caractérisés par une partie excentrique et/ou un bord plat.

L'invention couvre également un rack pour dispositif de fixation conforme à l'invention, constitué d'une paroi arrière sur laquelle est placée au moins une prise d'alimentation électrique et de préférence une prise pour échange de données et qui comprend également une paroi latérale sur laquelle est disposée au moins une gorge de guidage pour coopérer avec le picot d'un dispositif de fixation selon l'invention.

Un exemple de réalisation de l'invention est présenté ci-dessous à l'aide de figures qui montrent :
- Figure 1 :: un dispositif de fixation conforme à l'invention dans une position permettant la fixation sur un support vertical ;
- Figure 2 :: le dispositif de la figure 1 dans une position permettant une fixation sur un support horizontal ;
- Figure 3 :: le dispositif de la figure 1 en position rabattue ;
- Figure 4 :: le dispositif de la figure 2 en position rabattue ;
- Figure 5 :: le dispositif de la figure 2 en position verrouillée ;

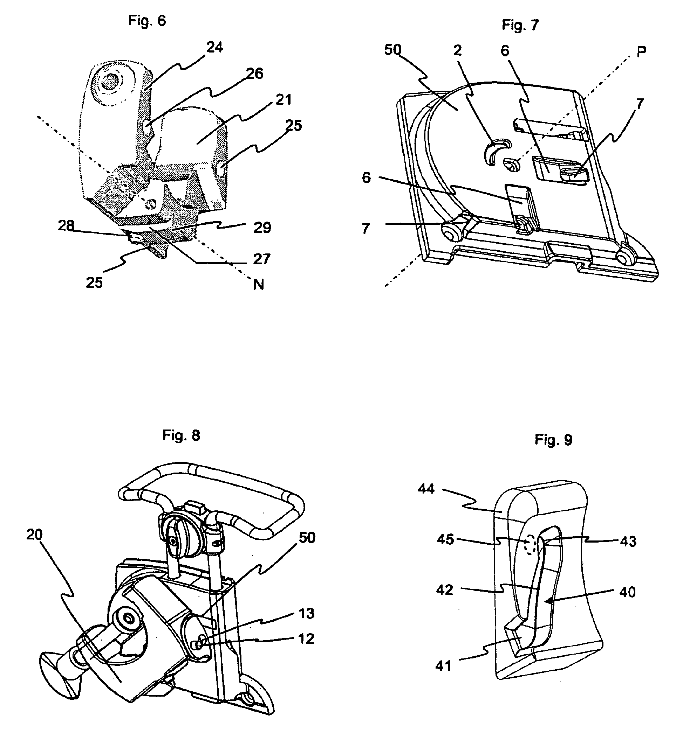

- Figure 6 :: une vue détaillée des moyens de guidage et de blocage de la noix pivotante sur la platine ;
- Figure 7 :: une vue détaillée des moyens de guidage et de blocage de la noix pivotante et de la platine sur la paroi de l'objet à fixer ;
- Figure 8 :: les moyens d'introduction sur le dispositif de la figure 3 pour faire pénétrer l'objet sur un emplacement d'un rack et l'y fixer ;
- Figure 9 :: les moyens d'introduction sur la paroi latérale d'un rack ;
- Figure 10 :: une vue en perspective du dispositif selon l'invention ;

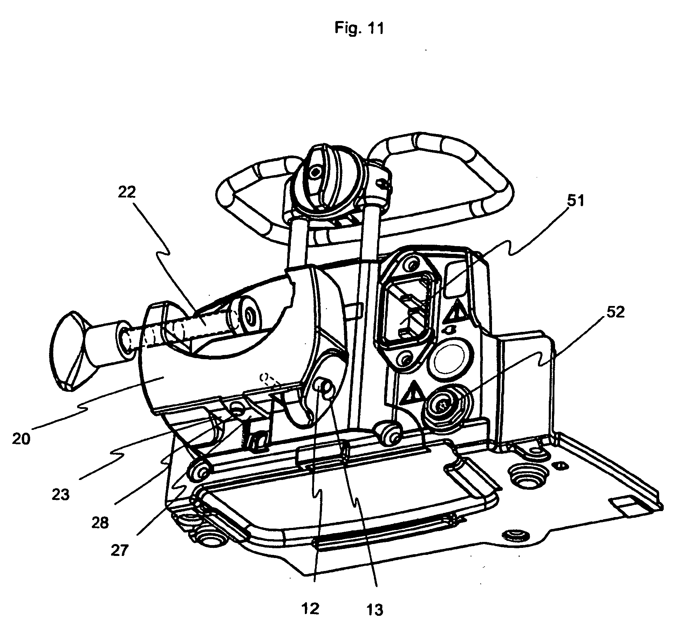

- Figure 11: une vue de dos d'un module muni de l'invention ;
- Figure 12: une coupe verticale à travers le dispositif de l'invention avec la noix pivotante rabattue et;
- Figure 13: la même coupe verticale que sur la figure 12, mais où la noix pivotante est en position ouverte et verrouillée.

Le dispositif de fixation (1) se compose essentiellement de trois parties : d'une platine pivotante (10), d'une noix pivotante (20) et d'un verrou (30).

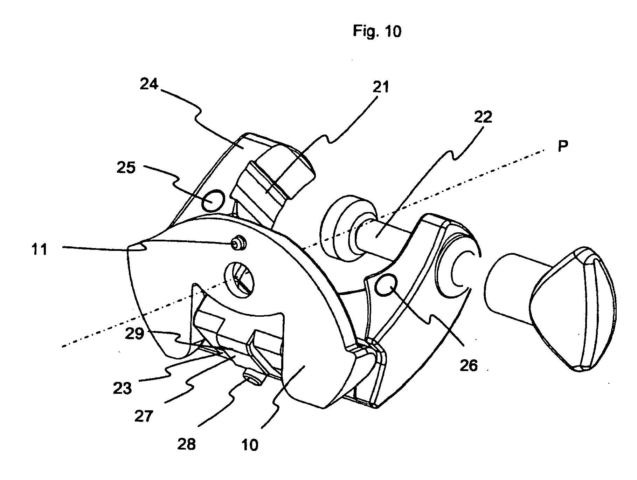

La platine pivotante (10) est fixée sur la paroi arrière (50) de l'objet à fixer. Elle peut pivoter de 90° autour de son axe (P). Afin de limiter le pivotement de la platine autour de son axe (P) à deux positions extrêmes décalées de 90° l'une de l'autre, on peut prévoir des moyens d'arrêt. Pour cela, on peut par exemple placer sur la face arrière de la platine (10), celle qui fait face à la paroi arrière de l'objet à fixer, un picot (11) qui peut glisser dans une gorge (2) ayant la forme d'un quart de cercle réalisée dans la paroi arrière (50) de l'objet à fixer (voir figures 10 pour le picot et 7 pour la gorge). Il va de soi qu'il est également possible de placer le picot sur la paroi de l'objet à fixer et la gorge sur la platine.

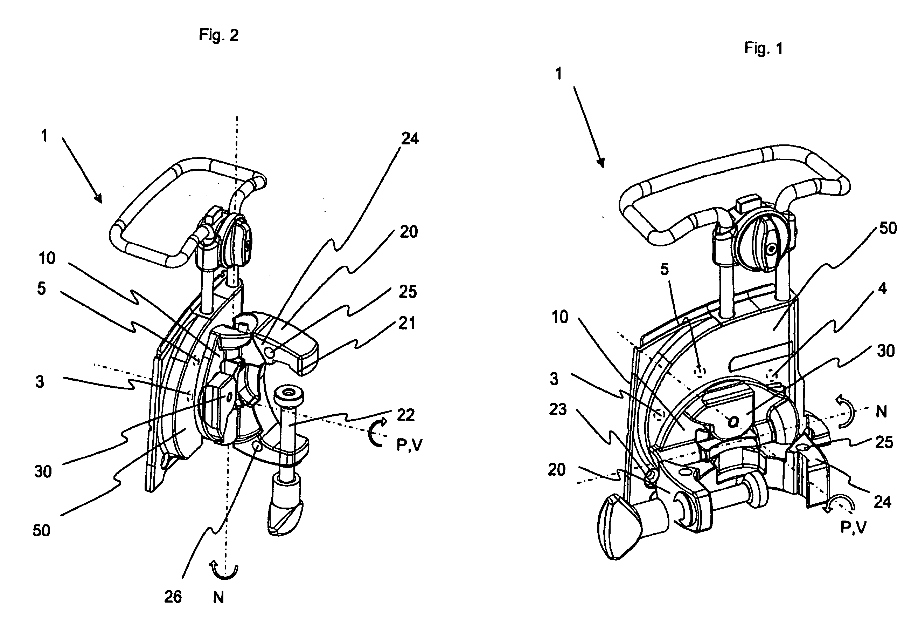

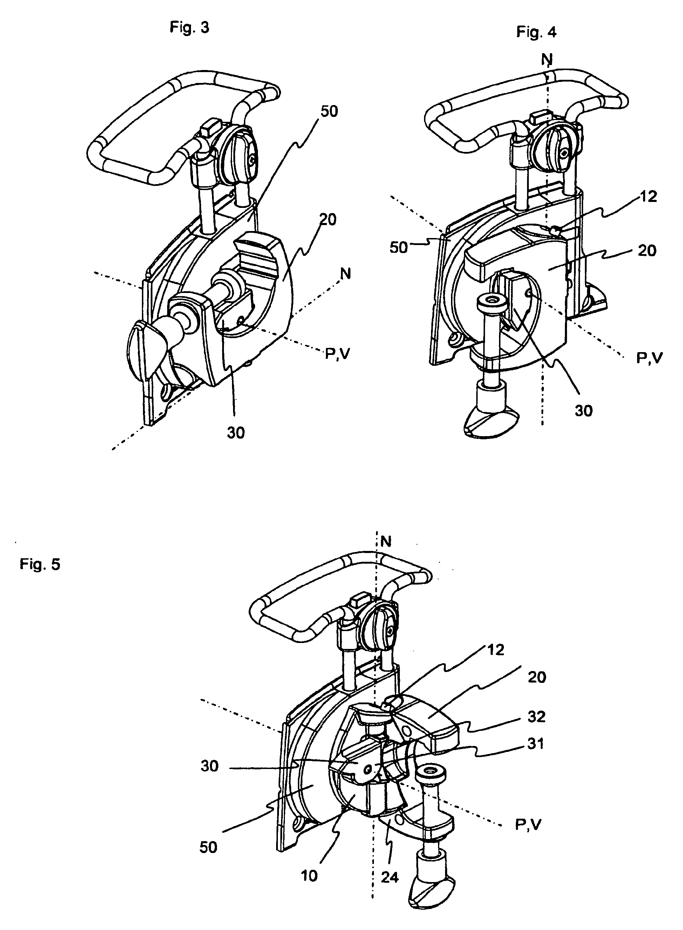

La noix pivotante (20) est constituée essentiellement d'un mors (21) et d'une vis de serrage (22). Elle est fixée sur la platine (10) de sorte à pouvoir pivoter autour de son axe (N) entre une position rabattue (figures 3 et 4) et une position ouverte (figure 1 et 2) après avoir réalisé un quart de tour autour de l'axe (N). La face arrière (23) de la noix pivotante (20), face faisant face à la platine en position redressée, peut servir de butée pour empêcher la noix de dépasser un angle de 90° en venant prendre appui sur la paroi arrière (50) de l'objet à fixer. D'autres types de butées sont bien sûr envisageables. La vis de serrage (22) sert de moyens d'actionnement des moyens de serrage. Comme le montrent les figures, elle est toujours accessible depuis le côté latéral des moyens de fixation, c'est-à-dire le côté latéral du module sur lequel ils sont fixés, et ce que les moyens de fixation soient redressés ou rabattus et qu'ils soient en position horizontale ou en position verticale. La main de l'utilisateur ne doit pas chercher derrière le module une vis de serrage redressée perpendiculairement à la face arrière de ce module.

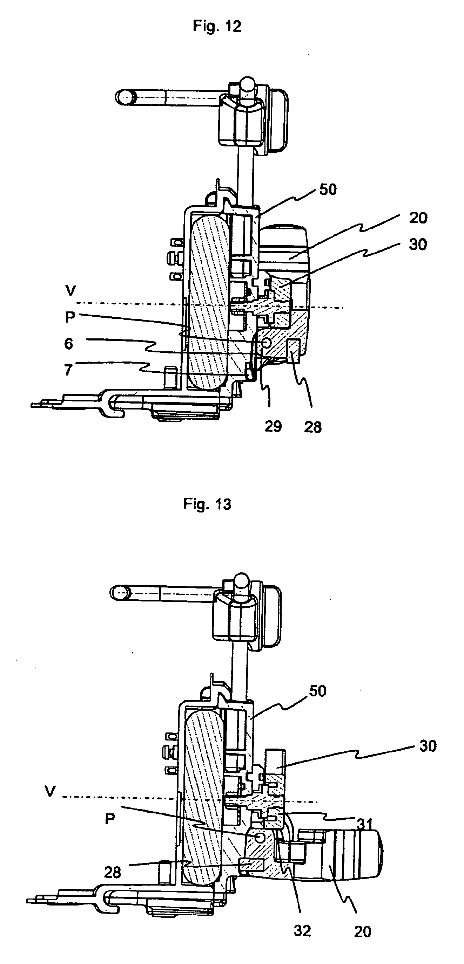

Pour des raisons de sécurité, il est préférable de pouvoir verrouiller la noix pivotante (20) dans sa position ouverte à l'aide de moyens de verrouillage. Ces moyens de verrouillage sont par exemple constitués par le verrou (30) qui est fixé sur la platine (10) de sorte à pouvoir pivoter autour de son axe (V). Il est avantageux que le verrou (30) soit clippé sur l'axe (P) de la platine. Dans ce cas, leurs axes (P, V) sont confondus. Ce verrou (30) est une pièce avec une partie excentrique (31) qui peut pivoter de 90°. Le bord extérieur (32) de cette partie excentrique (31) est plat. Lorsque la noix pivotante (20) est placée en position redressée, il suffit de faire pivoter le verrou (30) de sorte que le bord plat (32) de la partie excentrique (31) vienne prendre appui contre la face latérale interne (24) de la noix pivotante (20). Celle-ci ne peut alors plus se rabattre en position fermée. Si par ailleurs des butées (23) empêchent la noix de pivoter au-delà de 90°, la noix se trouve alors verrouillée en position ouverte. Les figures 12 et 13 illustrent le fonctionnement du verrou (30).

La noix pivotante (20) peut en position ouverte prendre par conséquent deux positions distinctes décalées de 90° l'une par rapport à l'autre. L'objet à fixer peut donc être fixé sur un mat vertical lorsque la noix pivotante (20) est ouverte en position horizontale (figure 1) ou sur un rail horizontal lorsqu'elle est ouverte en position verticale (figure 2). Les mêmes moyens de fixation permettent donc de fixer l'objet dans une position spatiale privilégiée.

Afin de guider le mouvement d'ouverture de la noix (20), il est préférable de la munir de moyens de guidage. Il est préférable qu'il y ait deux jeux de moyens de guidage pour guider l'ouverture de la noix en position horizontale et en position verticale. Ces moyens sont constitués par exemple d'une part d'une rainure (6) réalisée dans la paroi arrière (50) de l'objet à fixer et d'autre part d'une nervure correspondante (27) réalisée dans la face arrière (23) de la noix (20). Dès que la noix commence à pivoter autour de son axe (N), la nervure (27) commence à pénétrer dans la rainure (6) correspondant à sa position. Ce guidage n'a pas besoin d'être sans jeu. En raison du bord en coin (29) du bord d'attaque de la nervure (27), la noix ne peut être ouverte que si le bord en coin (29) peut pénétrer dans une des rainures (6). Autrement dit, il n'est pas possible de redresser la noix (20) tant que la platine (10) n'est pas dans une des deux positions d'utilisation. Grâce à ces moyens de guidage, il est possible de séparer le mouvement de rotation de la platine (10) autour de son axe (P) du mouvement d'ouverture de la noix (20) autour de son axe (N).

Une fois en position quasi ouverte, il peut être souhaitable de bloquer en rotation la noix de façon plus efficace. Pour cela, l'indexage angulaire en fin d'ouverture doit être le plus précis possible et sans jeu. On peut prévoir à cet effet un index (28) sur la nervure de guidage (27) qui pénètre dans une gorge d'indexage (7) avec aussi peu de jeu que possible.

Afin d'éviter que la noix pivotante (20) ne s'ouvre intempestivement, notamment lorsque l'objet est rangé, il est préférable de prévoir des moyens de retenue. Ces moyens de retenue peuvent être par exemple constitués par des aimants disposés d'une part (3, 4, 5) dans la paroi arrière (50) de l'objet à fixer ou sur la platine pivotante (10) et d'autre part (25, 26) sur la face interne (24) de la noix (20). Lorsque les aimants sont prévus dans la paroi arrière (50) de l'objet, il est préférable de prévoir dans cette paroi deux jeux d'aimants (3/4, 5) afin de permettre une retenue de la noix en position verticale aussi bien qu'en position horizontale. Ainsi en position rabattue horizontale, les aimants (25, 26) coopèrent avec les aimants (3, 4) de la face arrière de l'objet à fixer, tandis qu'en position rabattue verticale l'aimant (25) coopère avec l'aimant (5) de la paroi arrière de l'objet à fixer. Les aimants (3 et/ou 4, 5) placés dans la paroi arrière (50) de l'objet peuvent coopérer avec des détecteurs, par exemple des détecteurs à effet Hall. Ainsi, il est possible de détecter si la noix pivotante (20) est en position redressée ou en position rabattue, et dans ce dernier cas si elle est en position rabattue horizontale ou en position rabattue verticale.

Il est courant que les modules soient utilisés non seulement sur des supports verticaux et horizontaux, tels que des mats verticaux ou des rails horizontaux, mais également dans des racks. Les racks sont des supports munis de plusieurs emplacements dans ou sur lesquels peuvent prendre place des modules. Les emplacements sont conçus en général comme des évidements sensiblement rectangulaires présentant quatre parois latérales et une paroi de fond. Afin d'assurer l'alimentation électrique du module et/ou le transfert de données entre le module et une unité de commande générale, il est nécessaire de connecter le module à des prises correspondantes. Pour cela, des prises électriques (51, 52) se trouvent d'une part sur la paroi du fond de l'emplacement et d'autre part sur la paroi arrière du module (50). Lors de l'introduction du module dans l'emplacement du rack, il faut donc exercer une certaine pression sur le module pour vaincre les forces de résistance dues à la pénétration des contacteurs (51, 52) dans la ou les prises. Cette pression s'exerce horizontalement dans le sens d'introduction du module. On risque donc de renverser le rack si on ne prend pas la précaution de le retenir, par exemple par une pression de retenue sur sa face arrière. L'invention prévoit une solution qui contourne ce problème : la platine pivotante (10) est munie de moyens pour introduire le module sur un emplacement. Dans le cas de l'invention, le rack se compose d'une paroi arrière sur laquelle sont disposées à distances les unes des autres des prises d'alimentation électrique ainsi que des prises pour échange de données. Sur cette paroi arrière est fixée une paroi latérale (44) sur laquelle est fixé le module. Les moyens d'introduction comprennent par exemple un picot (12) parallèle à la paroi arrière (50) du module qui peut décrire un mouvement circulaire par rapport cette paroi arrière (50). Le picot (12) est destiné à pénétrer dans une gorge de guidage (40) réalisée dans la paroi latérale du rack du côté opposé aux prises électriques. Cette gorge de guidage (40) se décompose essentiellement en trois sections distinctes : une section d'introduction (41) sensiblement horizontale, une section de translation inclinée (42) et la section terminale sensiblement verticale (43). Lors de la mise en place du module, on commence par le placer de telle sorte que les prises électriques du rack et celles du module soient alignées. Le picot (12) commence alors à pénétrer dans la gorge de guidage (40) au niveau de la section d'introduction horizontale (41). Une fois cette introduction amorcée, il suffit d'exercer un mouvement circulaire sur la platine (10), par l'intermédiaire de la vis de serrage qui dépasse sur le côté du module, pour que le picot (12) commence à « remonter » dans la section inclinée (42) de la gorge de guidage (40). Du fait de l'inclinaison de cette section (42), le mouvement vers le haut du picot (12) implique un mouvement de translation en direction de la paroi arrière du rack de la platine pivotante (10) et par conséquent de l'ensemble du module. Du fait de l'inclinaison relativement importante de la section inclinée (42) de la gorge de guidage (40), il faut faire un mouvement de rotation relativement important pour ne provoquer qu'un mouvement de translation relativement faible. La force à exercer sur la platine pivotante pour vaincre les forces de résistance des connecteurs dans les prises est donc relativement faible. Le mouvement de rotation parallèle à la paroi arrière (50) du module suffit donc à faire pénétrer le module dans son emplacement. Il n'est plus nécessaire d'exercer une pression horizontale au risque de renverser l'ensemble du rack. A la fin du mouvement de rotation, le picot finit sa course dans la partie terminale (43) de la gorge et fixe ainsi le module en place.

Un aimant (13) placé de préférence près du picot (12) peut servir à détecter le bon positionnement du module sur l'emplacement. Pour cela, un capteur (45) peut être placé à proximité de la section terminale verticale (43) de la gorge de guidage (40). Ce capteur (45) peut être par exemple un capteur à effet Hall.

Il va de soi que les moyens d'introduction constitués par exemple par le picot (12) peuvent être placés sur une platine pivotante n'ayant pas d'autre fonction et n'ayant pas notamment de moyens pour la fixation sur un support horizontal ou un support vertical.

Liste des références :
- 1: Dispositif de fixation
- 2: Gorge de pivot pour la platine
- 3: Aimant
- 4: Aimant
- 5: Aimant
- 6: Rainure de guidage
- 7: Gorge d'indexage

- 10: Platine pivotante
- 11: Picot de guidage et d'arrêt
- 12: Picot de guidage pour rack
- 13: Aimant

- 20: Noix pivotante
- 21: Mors
- 22: Vis de serrage
- 23: Face arrière de la noix
- 24: Face latérale intérieure de la noix
- 25: Aimant
- 26: Aimant
- 27: Nervure de guidage
- 28: Index
- 29: Bord d'attaque en coin

- 30: Verrou
- 31: Partie excentrique du verrou
- 32: Bord plat

- 40: Gorge de guidage
- 41: Section d'introduction horizontale
- 42: Section de translation inclinée
- 43: Section terminale verticale
- 44: Paroi latérale d'un rack
- 45: Capteur à effet Hall

- 50: Paroi arrière de l'objet à fixer
- 51: Prise d'alimentation électrique
- 52: Prise pour échange de données

## Revendications

1. Objet, notamment un module médical, muni d'un dispositif de fixation pour le fixer dans une position spatiale privilégiée sur un support essentiellement vertical ou sur un support essentiellement horizontal, lequel dispositif de fixation est muni de moyens de fixation pouvant pivoter par rapport à l'objet à fixer de 90° autour d'un axe (P) et permettant indifféremment la fixation sur le support vertical ou sur le support horizontal, les moyens de fixation pivotants comprenant une platine pivotante (10), fixée sur l'une des parois de l'objet à fixer, de préférence la paroi arrière, de sorte à pouvoir pivoter par rapport à l'objet à fixer autour de l'axe (P) d'au moins 90° entre une première position permettant la fixation de l'objet sur un support vertical et une deuxième position permettant la fixation de l'objet sur un support horizontal, et de moyens de serrage (20) solidaires de la platine pivotante (10) pour serrer les moyens de fixation pivotants sur le support vertical ou le support horizontal, **caractérisé en ce que** les moyens de serrage peuvent pivoter par rapport à la platine (10) autour d'un axe (N) de sorte à pouvoir être rabattus contre la platine (10) ou redressés perpendiculairement à ladite platine (10).

2. Objet selon la revendication précédente, **caractérisé en ce que** les moyens de serrage (20, 21, 22) sont munis de moyens d'actionnement (22) disposés sur les moyens de serrage (20) de sorte à être manipulables depuis un côté latéral des moyens de fixation.

3. Objet selon l'une des revendications précédentes, **caractérisé en ce que** les moyens de serrage comprennent une noix (20) munie d'un mors (21) et d'une vis de serrage (22).

4. Objet selon l'une des revendications précédentes, **caractérisé en ce que** des moyens de verrouillage sont prévus pour verrouiller les moyens de serrage (20) dans la position redressée perpendiculaire à la platine (10).

5. Objet selon la revendication précédente, **caractérisé en ce que** les moyens de verrouillage comprennent un verrou (30) pivotant autour d'un axe de pivotement (V) parallèle à l'axe de pivotement (P) de la platine entre une position dans laquelle les moyens de serrage peuvent être rabattus contre la platine et une position dans laquelle les moyens de serrage sont verrouillés en position redressée, les axes (V) et (P) étant de préférence confondus, et ayant une partie excentrique (31) avec un bord plat (32) qui quand le verrou (30) est actionné prend appui contre les moyens de serrage (20) et en bloquent le pivotement.

6. Objet selon l'une des revendications précédentes, **caractérisé en ce que** des moyens de retenue sont prévus sur les moyens de serrage (20, 21) et/ou sur la platine (10), pour retenir les moyens de serrage (20, 21) contre la platine (10), sans pour autant les bloquer, lorsque les moyens de serrage (20, 21) sont en position rabattue contre ladite platine (10), les moyens de retenue étant de préférence constitués par des aimants (3, 4, 5, 25, 26).

7. Objet selon l'une des revendications précédentes, **caractérisé en ce que** des moyens d'arrêt sont prévus pour limiter le mouvement de pivot des moyens de fixation pivotants, de préférence entre deux positions extrêmes situées à 90° l'une de l'autre, ces moyens d'arrêt comprenant de préférence un picot de guidage et d'arrêt (11) solidaire de la platine (10) coopérant avec une gorge de guidage (2) réalisée dans la paroi de l'objet à fixer ou inversement.

8. Objet selon l'une des revendications précédentes, **caractérisé en ce que** des moyens de guidage sont prévus pour guider le mouvement de pivot des moyens de serrage (20) autour de l'axe (N) depuis la position rabattue vers la position redressée lorsque la platine se trouve dans l'une de ses deux positions, ces moyens de guidage comprenant de préférence une nervure de guidage (27) réalisée sur les moyens de serrage (20) et d'au moins une rainure de guidage (6) réalisée dans la paroi de l'objet à fixer et dans laquelle peut pénétrer la nervure de guidage lorsque les moyens de serrage (20) pivotent autour de l'axe (N) en direction de la position redressée, cette nervure de guidage et cette ou ces rainures de guidage (6) étant placées de telle sorte que les moyens de serrage ne peuvent être redresses que lorsque la platine est dans l'une de ses deux positions.

9. Objet selon l'une des revendications précédentes, **caractérisé en ce que** des moyens de blocage sont prévus pour bloquer la platine (10) dans au moins l'une de ses positions d'utilisation, ces moyens de blocage comprenant de préférence un index (28) placé sur les moyens de serrage (20) qui pénètre, lorsque les moyens de serrage (20) sont redressés en position d'utilisation, dans une gorge d'indexage (7) réalisée dans la paroi de l'objet à fixer.

10. Objet selon l'une des revendications précédentes, **caractérisé en ce que** les moyens de fixation pivotants comprennent une rainure dont les dimensions correspondent aux dimensions habituelles des supports horizontaux.

11. Objet selon l'une des revendications 3 à 9, **caractérisé en ce que** les moyens de fixation pivotants comprennent une rainure dont les dimensions correspondent aux dimensions habituelles des supports horizontaux, ladite rainure étant réalisée dans le mors (21) des moyens de serrage (20).

12. Objet selon l'une des revendications précédentes, **caractérisé en ce que** les moyens de fixation pivotants sont munis de moyens pour faire pénétrer l'objet à fixer sur un emplacement, par exemple dans un rack, lesdits moyens d'introduction comprenant de préférence un picot (12) parallèle à la paroi arrière (50) de l'objet et pouvant décrire un mouvement circulaire par rapport à ladite paroi arrière (50), ledit picot (12) pouvant pénétrer dans une gorge de guidage (40) réalisée dans une paroi latérale de l'emplacement du rack, de sorte que le mouvement du picot (12) dans la gorge de guidage (40) provoque l'entrée de l'objet à fixer dans l'emplacement.

13. Objet la revendication précédente, **caractérisé en ce qu'**un capteur (45) est prévu pour détecter le bon positionnement de l'objet à fixer dans l'emplacement, le capteur (45) étant de préférence un capteur à effet Hall coopérant avec un aimant (13) placé dans les moyens de fixation pivotants, de préférence à proximité du picot (12).

## Claims

1. Object, in particular a medical module, provided with a fixing device for fixing it in a favoured spatial position on an essentially vertical support or on an essentially horizontal support, the said fixing device being provided with fixing means that can pivot with respect to the object to be fixed by 90° about an axis (P) and allowing indifferently fixing to the vertical support or to the horizontal support, the pivoting fixing means comprising a pivoting plate (10) fixed to one of the walls of the object to be fixed, preferably the rear wall, so as to be able to pivot with respect to the object to be fixed about the axis (P) by at least 90° between a first position enabling the object to be fixed to a vertical support and a second position enabling the object to be fixed to a horizontal support, and clamping means (20) secured to the pivoting plate (10) in order to clamp the pivoting fixing means on the vertical support or the horizontal support, **characterised in that** the clamping means can pivot with respect to the plate (10) about an axis (N) so as to be able to be folded against the plate (10) or erected perpendicular to the said plate (10).

2. Object according to the preceding claim, **characterised in that** the clamping means (20, 21, 22) are provided with actuation means (22) arranged on the clamping means (20) so that they can be manipulated from a lateral side of the fixing means.

3. Object according to one of the preceding claims, **characterised in that** the clamping means comprise a clamp (20) provided with a jaw (21) and a clamping screw (22).

4. Object according to one of the preceding claims, **characterised in that** locking means are provided for locking the clamping means (20) in the erect position perpendicular to the plate (10).

5. Object according to the preceding claim, **characterised in that** the locking means comprise a bolt (30) pivoting about a pivot axis (V) parallel to the pivot axis (P) of the plate between a position in which the clamping means can be folded against the plate and the position in which the clamping means are locked in the erect position, the axes (V) and (P) preferably being merged, and having an eccentric part (31) with a flat edge (32) which, when the bolt (30) is actuated, bears against the clamping means (20) and locks the pivoting thereof.

6. Object according to one of the preceding claims, **characterised in that** holding means are provided on the clamping means (20, 21) and/or on the plate (10), in order to hold the clamping means (20, 21) against the plate (10), without for all that locking them, when the clamping means (20, 21) are in a position folded against the said plate (10), the holding means preferably consisting of magnets (3, 4, 5, 25, 26).

7. Object according to one of the preceding claims, **characterised in that** stop means are provided for limiting the pivoting movement of the pivoting fixing means, preferably between two extreme positions situated at 90° from each other, these stop means preferably comprising a guidance and stop stud (11) secured to the plate (10) and cooperating with a guide groove (2) produced in the wall of the object to be fixed or vice versa.

8. Object according to one of the preceding claims, **characterised in that** guidance means are provided for guiding the pivoting movement of the clamping means (20) about the axis (N) from the folded position to the erect position when the plate is situated in one of its two positions, these guidance means preferably comprising a guide rib (27) produced on the clamping means (20) and at least one guide groove (6) produced in the wall of the object to be fixed and in which the guide rib can enter when the clamping means (20) pivot about the axis (N) in the direct of the erect position, this guide rib and this or these guide grooves (6) being placed so that the clamping means can be erected only when the plate is in one of its two positions.

9. Object according to one of the preceding claims, **characterised in that** locking means are provided for locking the plate (10) in at least one of its positions of use, these locking means preferably comprising a locator (28) placed on the clamping means (20) that, when the clamping means (20) are erected in the position of use, enters a locating groove (7) produced in the wall of the object to be fixed.

10. Object according to one of the preceding claims, **characterised in that** the pivoting fixing means comprise a groove the dimensions of which correspond to the normal dimensions of the horizontal supports.

11. Object according to one of claims 3 to 9, **characterised in that** the pivoting fixing means comprise a groove the dimensions of which correspond the normal dimensions of the horizontal supports, the said groove being produced in the jaw (21) of the clamping means (20).

12. Object according to one of the preceding claims, **characterised in that** the pivoting fixing means are provided with means for causing the object to be fixed to a location to enter for example a rack, the said introduction means preferably comprising a stud (12) parallel to the rear wall (50) of the object and able to describe a circular movement with respect to the said rear wall (50), the said stud (12) being able to enter a guide groove (40) produced in a lateral wall of the location of the rack so that the movement of the stud (12) in the guide groove (40) causes the object to be fixed to enter the location.

13. Object according to the preceding claim, **characterised in that** a sensor (45) is provided for detecting the correct positioning of the object to be fixed in the location, the sensor (45) preferably being a Hall effect sensor cooperating with a magnet (13) placed in the pivoting fixing means, preferably close to the stud (12).

## Patentansprüche

1. Objekt, insbesondere medizinisches Moduls, das mit einer Vorrichtung zum Befestigen eines Objekts in einer bevorzugten räumlichen Stellung an einer im Wesentlichen vertikalen Halterung oder an einer im Wesentlichen horizontalen Halterung versehen ist, welche Vorrichtung mit Befestigungsmitteln, die sich bezüglich des zu befestigenden Objekts um 90° um eine Achse (P) schwenken lassen und die die Befestigung unterschiedslos an der vertikalen Halterung oder an der horizontalen Halterung ermöglichen, wobei die Schwenkbefestigungsmittel eine Schwenkplatte (10) umfassen, die an einer der Wände des zu befestigenden Objekts, vorzugsweise an der Rückwand, befestigt ist, damit sie bezüglich des zu befestigenden Objekts um mindestens 90° um eine Achse (P) zwischen einer ersten Stellung, die die Befestigung des Objekts an einer vertikalen Halterung gestattet, und einer zweiten Stellung, die die Befestigung des Objekts an einer horizontalen Halterung gestattet, schwenkbar ist, und mit Anziehmitteln (20), die mit der Schwenkplatte (10) fest verbunden sind, versehen ist, um die Schwenkbefestigungsmittel an der vertikalen Halterung oder der horizontalen Halterung anzuziehen, **dadurch gekennzeichnet, dass** die Anziehmittel bezüglich der Platte (10) um eine Achse (N) schwenkbar sind, damit sie gegen die Platte (10) heruntergeklappt oder senkrecht zur Platte (10) aufgerichtet werden können.

2. Objekt nach dem vorangehenden Anspruch, **dadurch gekennzeichnet, dass** die Anziehmittel (20, 21, 22) mit Betätigungsmitteln (22) versehen sind, die an den Anziehmitteln (20) angeordnet sind, damit ihre Handhabung von einer Seite der Befestigungsmittel aus möglich ist.

3. Objekt nach einem der vorangehenden Ansprüche, **dadurch gekennzeichnet, dass** die Anziehmittel eine Muffe (20) mit einer Spannbacke (21) und einer Spannschraube (22) umfassen.

4. Objekt nach einem der vorangehenden Ansprüche, **dadurch gekennzeichnet, dass** die Verriegelungsmittel dafür vorgesehen sind, die Anziehmittel (20) in der senkrecht zur Platte (10) aufgerichteten Stellung zu verriegeln.

5. Objekt nach dem vorangehenden Anspruch, **dadurch gekennzeichnet, dass** die Verriegelungsmittel einen Riegel (30) umfassen, der um eine Schwenkachse (V) parallel zur Schwenkachse (P) der Platte schwenkbar ist, und zwar zwischen einer Stellung, in der die Anziehmittel gegen die Platte heruntergeklappt werden können, und einer Stellung, in der die Anziehmittel in der aufgerichteten Stellung verriegelt sind, wobei die Achsen (V) und (P) vorzugsweise zusammenfallen, und der einen exzentrischen Teil (31) mit einem flachen Rand (32) aufweist, der wenn der Riegel (30) betätigt wird, sich gegen die Anziehmittel (20) abstützt und dadurch das Schwenken blockiert.

6. Objekt nach einem der vorangehenden Ansprüche, **dadurch gekennzeichnet, dass** Haltemittel an den Anziehmitteln (20, 21) und/oder an der Platte (10) vorgesehen sind, um die Anziehmittel (20, 21) gegen die Platte (10) zu halten, ohne sie dadurch zu blockieren, wenn die Anziehmittel (20, 21) sich in der gegen die Platte (10) heruntergeklappten Stellung befinden, wobei die Haltemittel vorzugsweise von Magneten (3, 4, 5, 25, 26) gebildet werden.

7. Objekt nach einem der vorangehenden Ansprüche, **dadurch gekennzeichnet, dass** Stoppmittel vorgesehen sind, um die Schwenkbewegung der Schwenkbefestigungsmittel zu begrenzen, vorzugsweise zwischen zwei um 90° auseinander liegenden Endstellungen, wobei diese Stoppmittel vorzugsweise einen Führungs- und Stoppstachel (11) umfassen, der mit der Platte (10) fest verbunden ist und mit einer Führungsnut (2) zusammenwirkt, die in die Wand des zu befestigenden Objekts gefertigt ist oder umgekehrt.

8. Objekt nach einem der vorangehenden Ansprüche, **dadurch gekennzeichnet, dass** Führungsmittel vorgesehen sind, um die Schwenkbewegung der Anziehmittel (20) um die Achse (N) zu führen, von der heruntergeklappten Stellung aus zur aufgerichteten Stellung, wenn die Platte sich in einer ihrer zwei Stellungen befindet, wobei diese Führungsmittel vorzugsweise eine an den Anziehmitteln (20) gefertigte Führungsrippe (27) und mindestens eine in die Wand des zu befestigenden Objekts gefertigte Führungsnut (6) umfassen und in der die Führungsrippe eintreten kann, wenn die Anziehmittel (20) um die Achse (N) in Richtung der aufgerichteten Stellung geschwenkt werden, wobei diese Führungsrippe und diese Führungsnut(en) (6) so angeordnet sind, dass die Anziehmittel nicht aufgerichtet werden können, wenn die Platte sich in einer von ihren zwei Stellungen befindet.

9. Objekt nach einem der vorangehenden Ansprüche, **dadurch gekennzeichnet, dass** Blockiermittel vorgesehen sind, um die Platte (10) in mindestens einer ihrer Gebrauchsstellungen zu blockieren, wobei diese Blockiermittel vorzugsweise einen an den Anziehmitteln (20) angeordneten Index (28) umfassen, der, wenn die Anziehmittel (20) in der Gebrauchsstellung aufgerichtet sind, in eine in die Wand des zu befestigenden Objekts gefertigte Indexnut (7) eintritt.

10. Objekt nach einem der vorangehenden Ansprüche, **dadurch gekennzeichnet, dass** die Schwenkbefestigungsmittel eine Nut umfassen, deren Abmessungen den üblichen Abmessungen der horizontalen Halterungen entsprechen.

11. Objekt nach einem der vorangehenden Ansprüche 3 bis 9, **dadurch gekennzeichnet, dass** die Schwenkbefestigungsmittel eine Nut umfassen, deren Abmessungen den üblichen Abmessungen der horizontalen Halterungen entsprechen, wobei die Nut in die Spannbacke (21) der Anziehmittel (20) gefertigt ist.

12. Objekt nach einem der vorangehenden Ansprüche, **dadurch gekennzeichnet, dass** die Schwenkbefestigungsmittel mit Mitteln versehen sind, um das an einem Einschubplatz, beispielsweise in einem Rack, zu befestigende Objekt eintreten zu lassen, wobei die Einführungsmittel vorzugsweise einen Stachel (12) parallel zur Rückwand (50) des Objekts umfassen, der eine kreisförmige Bewegung bezüglich der Rückwand (50) beschreiben kann, wobei der Stachel (12) in eine Führungsnut (40) eintreten kann, die in eine Seitenwand des Rack-Einschubplatzes so gefertigt ist, dass die Bewegung des Stachels (12) in der Führungsnut (40) den Eintritt des zu befestigenden Objekts in den Einschubplatz hervorruft.

13. Objekt nach dem vorangehenden Anspruch, **dadurch gekennzeichnet, dass** ein Sensor (45) vorgesehen ist, um die gute Positionierung des zu befestigenden Objekts an seinem Einschubplatz festzustellen, wobei der Sensor (45) vorzugsweise ein Hallsensor ist, der mit einem Magnet (13) zusammenwirkt, der in den Schwenkbefestigungsmitteln, vorzugsweise in der Nähe des Stachels (12), angeordnet ist.
